# EUROPEAN PATENT SPECIFICATION

(11) **EP 2 368 700 B1**
(45) Date of publication and mention of the grant of the patent: **19.06.2013**
(21) Application number: 11170594.3
(22) Date of filing: 05.07.2006
(51) Int. Cl.: B29C 70/44, B29C 33/04, B29C 33/40, B29C 70/54

(54) **Production system comprising vibration means and pressurised gas supply for producing a composite component**
Produktionssystem, umfassend Vibrationsmittel und Druckgaszuführung zur Herstellung eines Verbundbauteils
Système de production comprenant un moyen de vibration et d'alimentation de gaz sous pression pour la production d'un élément composite

(30) Priority: 05.07.2005 AU 2005903569
(43) Date of publication of application: 28.09.2011
(62) Divisional of application: 06752670.7
(73) Proprietor: Quickstep Technologies Pty, Ltd., North Coogee, WA 6163 (AU)
(72) Inventor: Graham, Neil Deryck Bray, Coogee, Western Australia 6166 (AU)
(74) Representative: Hanson, William Bennett

(56) References cited:
- WO-A1-02/058916
- WO-A1-2005/000566
- US-A- 4 942 013
- US-A- 6 149 844
- US-A1- 2002 047 224
- US-A1- 2004 113 305
- US-A1- 2005 037 678
- US-B1- 6 537 483
- WEAVER A: "Putting SCRIMP in context", REINFORCED PLASTICS, ELSEVIER ADVANCED TECHNOLOGY, NEW YORK, NY, US, vol. 41, no. 1, 1 January 1997 (1997-01-01), pages 22-26, XP004091170, ISSN: 0034-3617

## Description

The present invention is directed to the production of composite components made of fibre reinforced composite material, and is in particular directed to the production of composite components using fluid density and pressure, and preferably also fluid temperature. The present invention will be described with respect to its use in the production of boat hulls. It is however to be appreciated that the present invention is not limited to this application and that other applications are also envisaged.

It is now normal practice to use fibre reinforced composite material to produce large boat hulls because of its relative strength and lightness in weight. Commonly used methods to lay down the boat hull include spray lay-up and hand lay-up methods. The spray lay-up method uses a spray consisting of chopped reinforcing fibre and catalysed resin which is applied to the surface of a mould. In the hand lay-up method, the fibre in the form of woven, knitted, stitched or bonded fabric is laid on the surface of the mould and resin is then subsequently impregnated into the fibre lay-up using hand operated rollers and brushes. In both methods, the resin is left to cure under standard atmospheric conditions.

As the resin is exposed to the atmosphere in the above described two methods, significant amounts of volatiles, and in particular styrene gas, is emitted from the resin, and the airborne volatile concentrations can be high enough to reach levels hazardous to health. As government health authorities introduce legislation to control such emissions, boat builders need to move to other methods which minimise such emissions.

One such method is known as vacuum bagging where a release film, breather film and finally a vacuum bagging film is located over a composite lay-up applied using the above-described hand lay-up method. The vacuum bagging film is then sealed along its edge and the air from under the film evacuated using a vacuum pump. This vacuum bagging method helps to better consolidate the composite lay-up and ensure better wetting of the fibre as well as helping to reduce the amount of volatiles emitted during curing.

In a further development of this vacuum bagging method, the vacuum bagging film is laid out over a dry composite lay-up, and catalysed resin drawn into the lay-up using an infusion method while the air under the vacuum bag film is evacuated by the vacuum pump. A knitted non-structural fabric or resin distribution tubes can be laid over the composite lay-up to assist in resin distribution under the vacuum bagging skin through the lay-up. Such a method is for example described in US patents 4,902,215 and 5,052,906.

While these vacuum bag based methods do help to reduce airborne volatile emissions, they are time consuming methods as great care must be taken to apply the films and ensure that there are no air leaks through the vacuum bagging film. If insufficient care is taken to ensure that there are no air leaks and if the resin is not properly mixed, this could lead to incomplete infusion of resin, with areas of the lay-up being left un-wetted with resin. The resultant dry areas will render the boat hull unusable. Furthermore, the costs can be high because the vacuum bagging film as well as the release and breather films used in this method can usually only be used once and must subsequently be disposed of. Any other resin distribution components such as resin distribution lines will also need to be discarded.

All of the above methods are nevertheless only suited for one off or small scale production of boat hulls and are not suitable for the mass production of such hulls. Another composite production method, which has been used in particular for the production of high precision composite components for the aeronautical and automotive industries, is resin transfer moulding (RTM). This production method requires the use of solid male and female mould dies, which when held together define a mould cavity. Reinforcing fibre and other material is carefully laid within the mould cavity, and resin is injected under high pressure into that cavity.

There are a number of problems associated with the use of RTM in the production of boat hulls.
a) It is necessary to manufacture expensive matched male and female mould dies having high dimensional tolerances.
b) The exothermic reactions during the curing of the catalysed resin leads to substantial temperature increases within the composite lay-up. It can be difficult to control such temperature increases when matched mould dies are being used.
c) In RTM, it is common practice to use a fibre reinforcing laminate pre-form having a central foam core to facilitate infusion of the resin therethrough. If the reinforcing laminate is laid incorrectly with the mould cavity, they can act to block and impede the resin flow through the cavity resulting in areas that remain poorly or not wetted by resin. Care must therefore be taken to properly lay the reinforcing fibre resulting in long production times.
d) Upright fittings such as the bulkheads and web reinforcements must be fixed to the hull shell after the hull shell has been cured. As well as extending the total production time, the join area between the hull and bulkheads will inherently form an area of weakness within the hull because of the discontinuity in material properties along the join line between the hull shell and bulkheads.

In US patent 5,971,742, an apparatus is described which replaces each of the solid mould dies with a rigid housing supporting a thin, semi-rigid fibreglass membrane providing the mould surface. The housing and membrane together define a fluid chamber filled with a non-compressible heat conductive fluid. Temperature control coils extend into each fluid chamber to control the temperature of the fluid within the chamber. While this arrangement helps to alleviate the first problem, the high temperatures generated by the curing resin still requires a cooling period for the production plant after each production sequence. Furthermore, the use of semi-rigid mould walls having minimal deflection will still leave the possibility of the fibre preform being trapped at points between the opposing mould walls leading to point contacts where resin is unable to flow through. The practical problems associated with trying to form integral upright fittings, with the difficulty in transferring resin into upright portions of a fibre preform still also remain.

WO 2005/000566 A1 describes a production system according to the preamble of claim 1.

WO 02/058916 A1 discloses a system for producing composite components including first and second pressure chambers each having an elastically deformable chamber wall, and means for circulating fluid at an elevated temperature and pressure through the pressure chambers. A mould assembly, providing a mould cavity within which a composite lay-up is located, is accommodated between the chamber walls such that the lay-up can be compressed and cured or formed.

Marsh G: "Putting SCRIMP in context", Reinforced Plastics, Elsevier Advanced Technology, New York,NY, US, vol. 41, no.1, January 1997, pages 22-25 describes supllying resin within a ring chamber surrounding a mould.

It is therefore an object of the present invention to provide a composite component production method that avoids at least one of the disadvantages of prior art production methods including the RTM production method described above.

According to the present invention, there is provided a production system for producing a composite component including:
a mould assembly including:
   a relatively rigid female mould section having a female mould cavity; resin supply means for supplying resin;
   a male mould section formed of an elastically deformable material, the male mould section having an outer male mould face, and an inner volume for accommodating a liquid;
   a mould chamber being defined between the female mould cavity and the male mould face when the female and male mould sections are brought together;
   a vacuum supply means for producing a vacuum in the mould chamber, and vibration means for vibrating the mould assembly;
   characterised in that
   a peripheral portion surrounds the periphery of the female mould cavity, the peripheral portion including a ring chamber (within which the resin can be supplied;
   and in that a pressurised gas supply is provided for supplying a pulse of high pressure gas periodically into the ring chamber.

The ring chamber may be defined by a peripheral relatively rigid ring flange surrounding and supporting the male mould section, the ring flange engaging the peripheral portion surrounding the female mould cavity. A seal means, for example a resilient sealing rib(s), may be provided between the ring flange and the ring portion to provide an at least substantially air tight seal for the ring chamber.

The pool of resin within the ring chamber serves two purposes. It firstly provides the source of resin for wetting the reinforcing material within the mould chamber. It also provides a liquid seal around the mould cavity that ensures that a vacuum can be applied to that mould chamber.

At least a peripheral portion of the reinforcing material may extend into the area of the ring chamber, and may act as a wick to allow the resin to permeate into the rest of the reinforcing material through capillary action.

A series of resin supply lines may supply resin to the ring chamber at points distributed along the ring chamber. Alternatively, a single resin supply line may extend parallel with the ring chamber, the supply line having a series of bleed lines spaced therealong from which resin can be discharged into the ring chamber.

The vacuum supply means may include a vacuum pump and at least one vacuum line. A first vacuum line may be in communication with the mould chamber. The first vacuum line may be connected to an opening provided within the male mould section to thereby apply a vacuum to the mould chamber. Preferably a second vacuum line is provided in communication with the ring chamber to thereby apply a vacuum to the ring chamber. A valve may control the vacuum being applied by both the first and second vacuum lines. In a first position of the valve, a vacuum may be applied by both vacuum lines such that there is little to no pressure differential across the resin accumulated within the ring chamber. This restricts the transfer of resin from the ring chamber into the mould chamber. In a second position, the first vacuum line is blocked/closed to stop the vacuum in the ring chamber then opened to the atmosphere so that only a vacuum is applied by the second vacuum line. This results in a sudden increase in the pressure differential across the resin held in the ring chamber thereby forcing a "wave" of the resin through into the mould chamber. The vacuum is again reapplied to the ring chamber by again opening the first vacuum line when the resin is almost exhausted from the ring chamber. This allows more resin to be supplied to the ring chamber. The apparatus thereby allows for periodic waves of resin to enter the mould chamber.

A pulse of high pressure gas is periodically supplied to the ring chamber from the pressurised gas supply. The effect of this high pressure pulse is to force the resin within the ring chamber into the mould chamber with a "wave" of resin being thereby transferred into the mould chamber. This resin wave helps to more rapidly and more efficiently transfer and infuse the resin into the composite material to ensure complete wetting therethrough. A resin sensor may be respectively provided at a lower and higher portion of the ring chamber to check when the resin level therein has reached a low point beyond which the resin seal would be broken, and a high point where no further resin is required to be supplied. When the resin reaches that lower point, the pressure differential and/or any further high pressure gas supply the ring chamber is stopped and further resin can then be delivered to replenish the supply within the ring chamber.

Vibration means such as a surface mounted external mechanical vibrator are used to vibrate the mould assembly and ensure complete wetting of the composite material.

In the Applicant's US patent 6,149,844 there is described an apparatus for producing composite components utilising balanced pressure. The apparatus has two opposing pressure chambers, one chamber supporting a floating rigid mould, the other chamber having an elastically deformable mould face. A composite lay-up could be laid on the mould, and a vacuum bag is then located over the lay-up and evacuated to thereby compact the lay-up and withdraw most of the air from the lay-up. The pressure chambers are then brought together so that the resiliently deformable mould face would be located over the vacuum bag under which is located the composite lay-up. Fluid at elevated pressure and temperature is then circulated through each pressure chamber to ensure that a balanced pressure and a uniform temperature is applied to the composite lay-up. This leads to composite components being produced having higher material quality than would be the case with more conventional methods including RTM.

Balanced pressures may also be used according to the present invention. To this end, the female mould section may be supported in a floating arrangement on a first housing to form a first pressure chamber while the male mould section may be supported on a second housing to form a second pressure chamber. The apparatus according to the present invention does not require the use of a separate vacuum bag to evacuate the composite fibre material, and the male mould/skin section may directly contact the composite fibre material. Fluid circulation means may circulate fluid at elevated pressure through each pressure chamber during the production process. The fluid pressure may be substantially equal in both chambers to thereby provide the additional benefits of balanced pressure.

It is also envisaged that the fluid being circulated through each pressure chamber is also at an elevated temperature where high temperature curing resins are being used or where the resin needs to be heated to reduce its overall viscosity and therefore its fluid density. Fluid at a lower temperature can be subsequently circulated through the pressure chambers to facilitate cooling of the component as the resin cures.

The present invention has particular advantages over the prior art RTM production methods currently used to produce boat hulls. Firstly, it is not necessary to produce expensive and heavy mould dies. Indeed, the female mould section can be fabricated from relatively low cost material as it is not required to support any substantial pressure or weight. The bladder construction of the male mould section can be simply formed from resiliently deformable material such as rubber, for example natural latex rubber. As well as being relatively simple to form, the weight of the male mould section will be much lower than would be the case for a rigid mould die.

Furthermore, balanced pressure and vacuum is a far more effective means of distributing the resin evenly within the reinforcing fibre material. Because of this efficiency, the mould chamber can be more complex in shape and may for example include volumes for forming the bulkheads of the ship hull. Also, separate components such as connecting lugs can be located within and integrally embedded within the final composite component. This allows the boat hull to be constructed as a single integral unit leading to more uniform material properties through the boat hull with no areas of potential weakness. Also, as the various components of the boat hull can be formed at the same time, this leads to significant reductions in production times. Furthermore, by comparison to conventional RTM methods where special high flow resins and high quality fibre materials are required, the present invention can use a variety of different resins and fibre materials.

It will be convenient to further describe the invention with reference to the accompanying drawings which illustrate preferred embodiments of the present invention. Other arrangements are possible, and consequently, the particularity of the accompanying drawings is not to be understood as superseding the generality of the preceding description of the invention.

In the drawings:
Figure 1 is a schematic cross-sectional view showing a a production system for producing a composite component which is not part of the present invention;
Figure 2 is a schematic side cross-sectional view of the production system of Figure 1;
Figure 3 is a schematic cross-sectional view of a second production system which is not part of the present invention;
Figure 4 is a schematic cross-sectional view of a third production system which is not part of the present invention;
Figure 5 is a schematic cross-sectional view of a first preferred embodiment of a production system according to the present invention;
Figure 5A is a detailed view of section A of Figure 5;
Figure 6 is a schematic cross-sectional view of a fourth production system which is not part of the present invention; and
Figure 7 is a schematic cross-sectional view of a second preferred embodiment according to the present invention.
Figure 8 is a schematic cross-sectional view of a fifth system which is not part of the present invention;
Figures 9A and 9B shows schematically the separation of the male mould section from the completed component ; and
Figure 10 is a detailed schematic view showing a resin wave according to the present invention;
Figure 11 is a detailed schematic view showing a reinforced upright being formed according to the present invention and;
Figure 12 is a detailed schematic view of an embodiment of the male mould section according to the present invention.

We initially note that corresponding features in different preferred embodiments of the present invention are generally provided with the same reference numeral for clarity reasons.

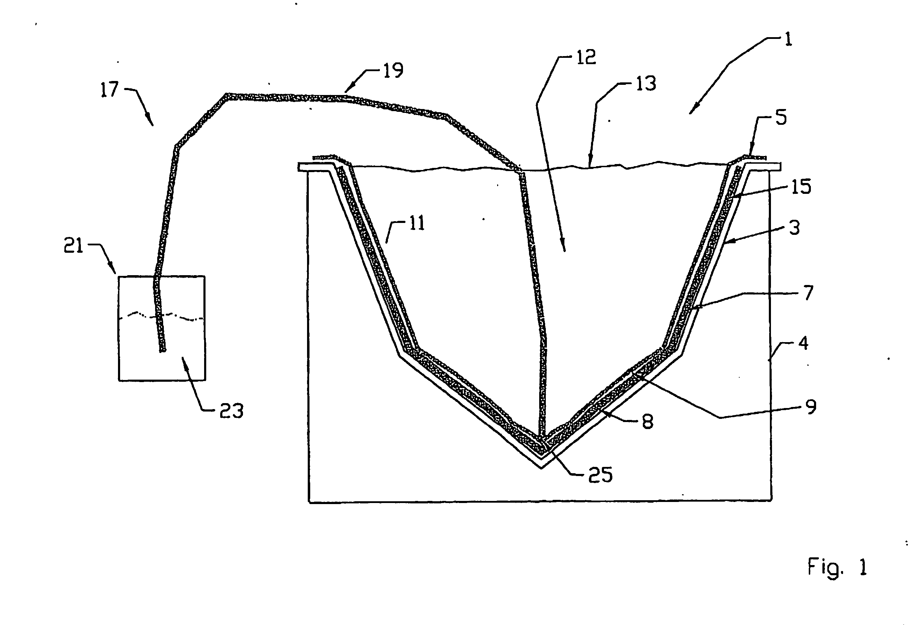

Referring initially to Figure 1, there is shown a basic configuration of a production system, a mould assembly 1 having a female mould section 3 and a male mould section 5. The female mould section 3 includes a female mould cavity 7 and is made of a relatively rigid material. The female mould section 3 is rigidly held in position on a mould support arrangement 4. The male mould section 5 is formed of an elastically deformable material such as rubber and includes an outer surface 9 providing the male mould face for the male mould section 5. The male mould section 5 furthermore includes an inner volume 11 for accommodating a liquid 13 during the production process.

According to the method of the present invention, fibre reinforcing material 15 is initially laid within the female mould cavity 7. The male mould section 5 is then located over the female mould section 3 and the inner volume 11 of the male mould section 5 is then filled with a fluid 12. This fluid 12 can conveniently be water, but the use of other fluids of higher density or higher temperature capacity such as glycol is also envisaged. A resin supply means 17 including a resin supply line 19 and a resin tank 21 then supplies catalysed and/or mixed liquid resin through the resin supply line 19 to an opening 25 provided in the lowermost point of the male mould face 9. The resin 23 is supplied to the mould chamber 8 defined by the narrow volume between the female mould face 7 and the male mould face 9. The resin 23 may be pumped from the resin tank 21 to the mould chamber 8, or the resin tank 21 can be held at a height above the level of the fluid 13 within the inner volume 11 to allow resin 23 to flow into the mould chamber 8. The pressure within the mould chamber 8 at the opening 25 is a function of the fluid column height above the lowermost point of the male mould section 5.

The resin 23 upon entering through the opening 25 is dispersed through the fibre material 15 because of the pressure differential at this point and the capillary attraction of the resin to the reinforcing fibre material 15 with the resin "wicking" along the fibres. As the resin 23 continues to flow into the mould chamber 8 and spreads and moves towards the sides and top of the fibre bundle15, the fluid column pressure on the male mould section 5 will also progressively decrease to a minimum adjacent the fluid level 13. As this can slow the speed of progress of the resin 23 as it moves higher within the mould the fluid 12 can preferably have a higher density than the resin 23, or the fluid level 13 may be at a height significantly above the mould sections 3, 5 such that a sufficient fluid column pressure is applied over the male mould section 5 to disperse the resin 23 through the fibre bundle 15. It is also envisaged that either the resin 23 or the fluid 12 be preheated to thereby result in the lowering of the viscosity and therefore the density of the resin 23 to more easily infuse the part over a long period of time say 40C. The resin selected can be catalysed and/or mixed to only cure at a high temperature say 60 to 80C. Therefore to cure the part the fluid temperature can then be increased rapidly to 80C to cure the part.

The supplied resin 23 is thereby distributed over and infused into the fibre composite material or fibre bundle 15 as the pressure applied by the fluid 13 accommodated within the inner volume 11 interacts with and seeks to balance forces with the liquid catalysed resin 23 within the mould chamber 8. This helps ensure that the resin 23 is distributed evenly through the composite bundle 15.

The mould assembly 1 including the female mould section and the male mould section 5 can also be heated prior to and during the production process. This allows the use of high viscosity resin 23 which needs to be heated to reduce its viscosity thereby facilitating the wetting of the fibre reinforcing material 15.

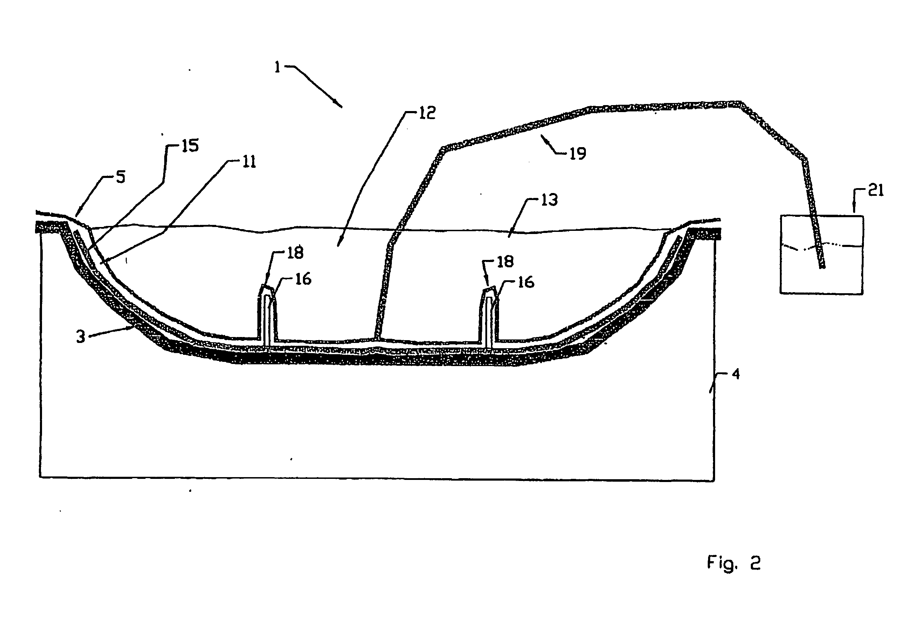

The male mould section 5 must be deformable to enable the fluid column pressures to act on the resin 23 as well as to ensure that the male mould face conforms to the fibre bundle 15 supported within the female mould cavity 7. Referring now to Figure 2, the deformability of the male mould section 5 together with the force applied by the fluid 12 accommodated within the inner volume 11 thereby allows components of more complicated shapes to be produced. Figure 2 shows the fibre composite material 15 laid to further include uprights 16. These upright sections eventually provide the uprights required for reinforcement of the finished boat hull, these uprights being integrally formed with the rest of the hull. The male mould section 5 can be shaped to include the channels 18 for allowing these uprights to be integrally formed with the rest of the boat hull The resin 23 is urged up through the channels 18 which conform around the uprights 16 due to the fluid column pressure applied to the outer surface of the channels 18.

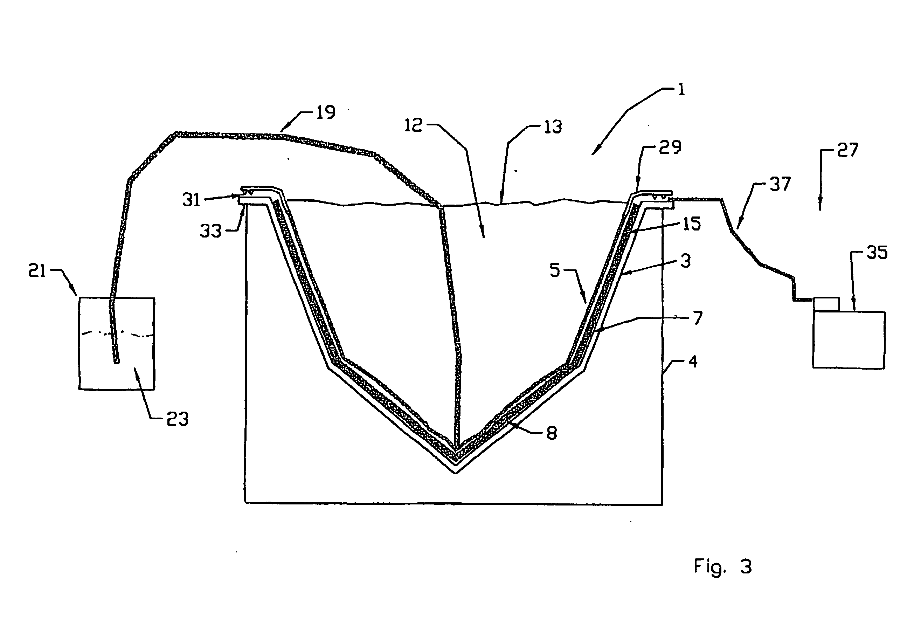

To facilitate the infusion of resin 23 through the composite material 15, a vacuum can be provided within the mould chamber 8 to evacuate air from the fibre reinforcing material 15 as well as to draw the resin 23 into the mould chamber 8. Figure 3 shows a production system similar to that shown in Figure 1, but further including vacuum supply means 27. The male mould section 5 further includes a relatively rigid ring flange 29 surrounding and supporting the resiliently deformable portion of the male mould section 5. A seal means, for example resilient sealing ribs 31, is provided between the ring flange 29 and the peripheral portion 33 of the female mould section surrounding the female mould cavity 7. This allows a vacuum to be provided within the mould chamber 8. The vacuum supply means includes a vacuum pump 35 and a vacuum line 37 in communication with the mould chamber 8. The vacuum line 37 is shown in Figure 3 as communicating through an opening (not shown) provided between the ring flange 29 of the male mould section and the peripheral portion 33 of the female mould section 3. It is to be appreciated that the vacuum line 37 could alternatively be connected to an opening provided in the male mould section 5 or female mould section 3, this opening being in fluid communication with the mould chamber 8.

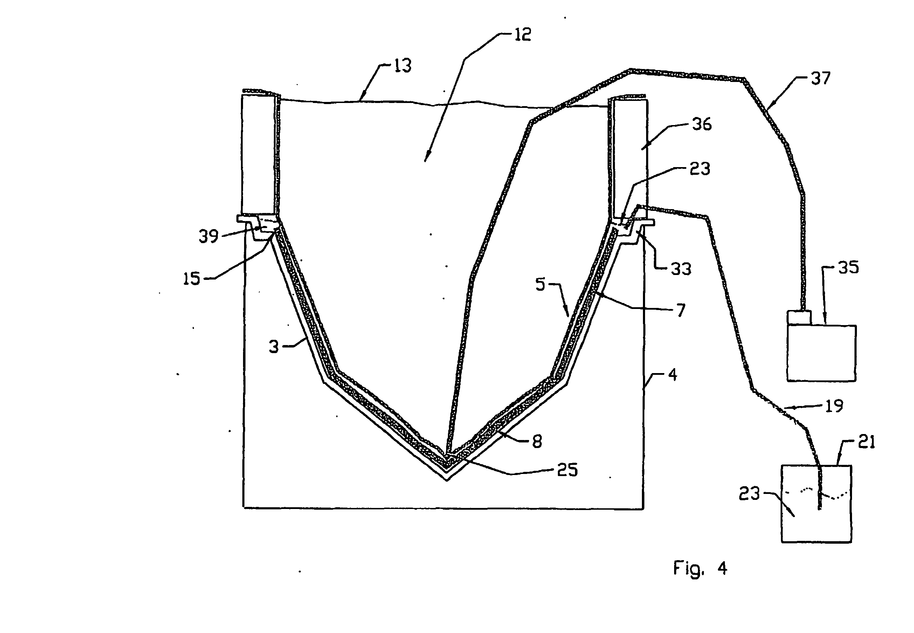

Figure 4 shows another system which differs from the one shown in Figure 3 in that the vacuum line 37 is connected to the opening 23 located at the lowermost portion of the male mould section 5. A ring chamber 39 is defined by a space provided between a peripheral shoulder portion 33 provided around the female mould cavity 7 and an upper wall 36 supporting the male mould section 5. The upper wall 36 extends above the female mould section 3 such that the fluid level 13 can be at a significant height above the mould sections 3, 5 thereby ensuring that higher fluid column pressures are applied over the fibre bundle 15. The resin line 19 or a container of resin poured into the ring supplies resin 23 from the resin tank 21 to the ring chamber 39 such that a volume of resin 23 is held within the ring chamber. This resin 23 acts as a ring seal around the mould chamber 8 to thereby allow the vacuum to be applied to the mould chamber 8. This vacuum draws resin 23 into the mould chamber 8 thereby wetting fibre bundle15, while the resin 23 within the ring chamber 39 is replenished from the resin supply line 19. Furthermore, the periphery of the fibre bundle 15 can be partly accommodated within the ring chamber 39 to thereby act as a wick for transferring the resin 23 into the fibre bundle 15. The fluid column pressure applied to the mould chamber 8 ensures that the resin 23 is distributed evenly throughout the fibre bundle 15.

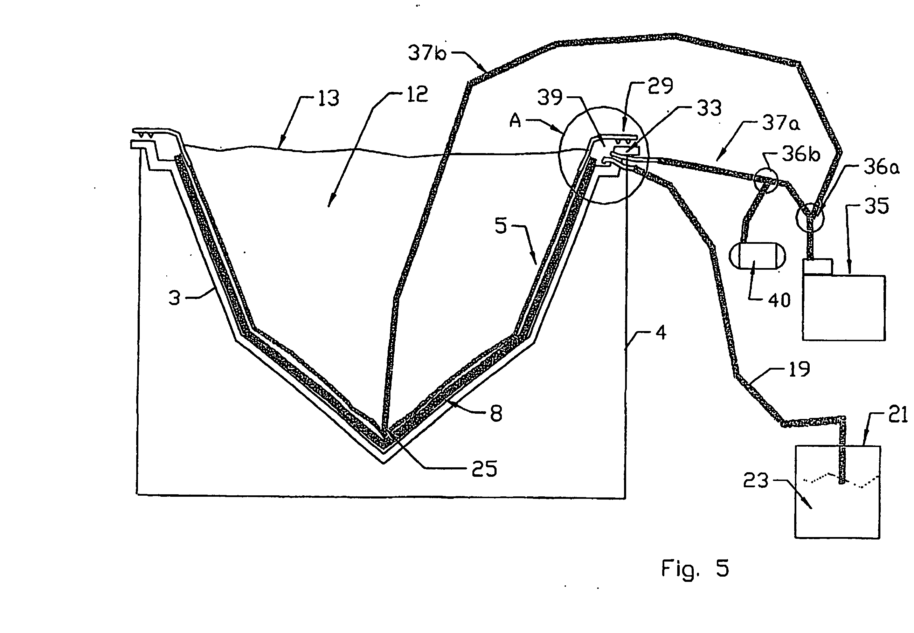

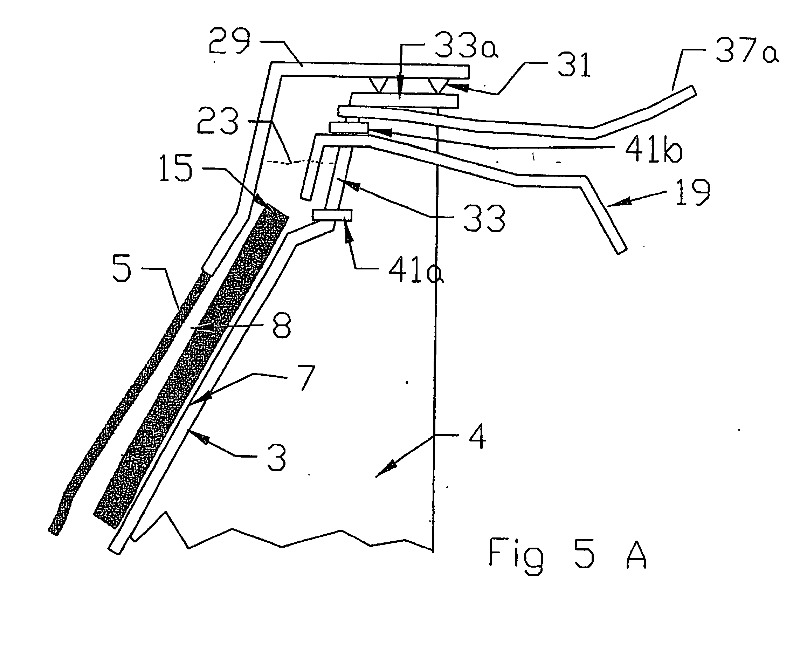

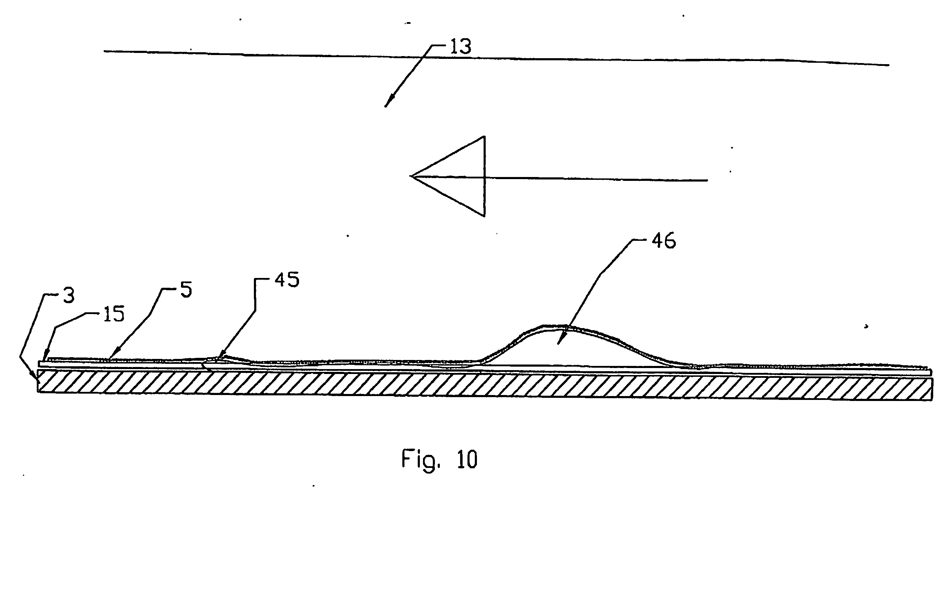

Figures 5 and 5A show an embodiment of the present invention similar to that shown in Figure 4 in that it includes a ring chamber 39 through which resin 23 can be supplied to the mould chamber 8. This ring chamber 39 is however defined by a space provided between the ring flange 29 of the male mould section 5 and the peripheral portion 33 of the female mould section 3. The peripheral portion 33 includes a side wall 33b and a top wall 33a. The resin supply line 19 extends through the peripheral portion side wall 33b to communicate with the ring chamber 39. Lower and upper resin sensors 41a and 41b are also located within the side wall 33b. In the present embodiment, first and second vacuum lines 37a and 37b are respectively in communication with the ring chamber 39 and the opening 25 provided in the male mould section 5. During the production process, resin 23 fills at least a substantial portion of the ring chamber 39. Seals 31 are provided between the ring flange 29 of the male mould section 5 and the peripheral portion top wall 33a to thereby allow the vacuum supply line 37a to properly evacuate the ring chamber 39. The seals 31 are always located above the level of the resin 23 to avoid contamination by the resin 23. The second vacuum line 37b can apply a vacuum directly to the mould chamber 8, with the vacuum pump 35 being connected to each vacuum line 37a, 37b through a first valve 36a. This valve 36a allows the vacuum pump 35 to be connected to both vacuum lines simultaneously or to only one vacuum line. When both vacuum lines 37a and 37b are connected to the vacuum pump 35, there is a minimal pressure differential between the ring chamber 39 and the mould chamber 8. Therefore, the resin 23 held within the ring chamber 39 will tend to remain and accumulate within that ring chamber. The first vacuum line 37a in communication with the ring chamber 39 can be closed off and vented to atmosphere while the second vacuum line 37b remains connected to the vacuum pump 35 thereby releasing the vacuum within the ring chamber 39. The resultant relatively sudden increase in the pressure differential across the resin ring and between the ring chamber 39 and the mould chamber 8 results in a resin wave 46 (as shown in Figure 10) being generated which travels through the mould chamber 8 from the ring chamber 39. This resin wave produces a temporary bulge in the male mould section 5 as it travels through the mould chamber 8 and acts to push in front of the wave 46 the resin face, being the front edge of the resin 23 as it is transferred into and wets the fibre bundle 15. This resin wave effect helps to facilitate the speed of transfer of the resin 23 into the fibre bundle 15.

It is advantageous to further assist the transfer of resin 23 from the ring chamber 39 to the mould chamber 8 by also applying periodic pulses of high pressure gas into the ring chamber 39 to assist to push the resin 23 through into the mould chamber 8. A pressure tank 40 is connected to the first resin 37a via a second valve 36b. The first valve 36a first disconnects the vacuum line from the vacuum pump 35 before the second valve 36b connects the pressure tank 40 to the vacuum line 37a. This enables a pressure pulse to be applied to the ring chamber 39 by using high pressure gas from the pressure tank 40. This pulse of high pressure gas continues until the level of resin 23 within the ring chamber 39 drops below the level of the resin sensor 41a. At that time the high pressure gas supply is stopped and the ring chamber allowed to re-fill with resin 23 until the resin reaches the level of the second resin sensor 41b. The use of high pressure gas also helps to transfer resin 23 via the resin wave 46 passing into the mould chamber 8. This further facilitates the transfer of resin 23 increasing the speed at which the composite material 15 can be completely wetted by the resin 23.

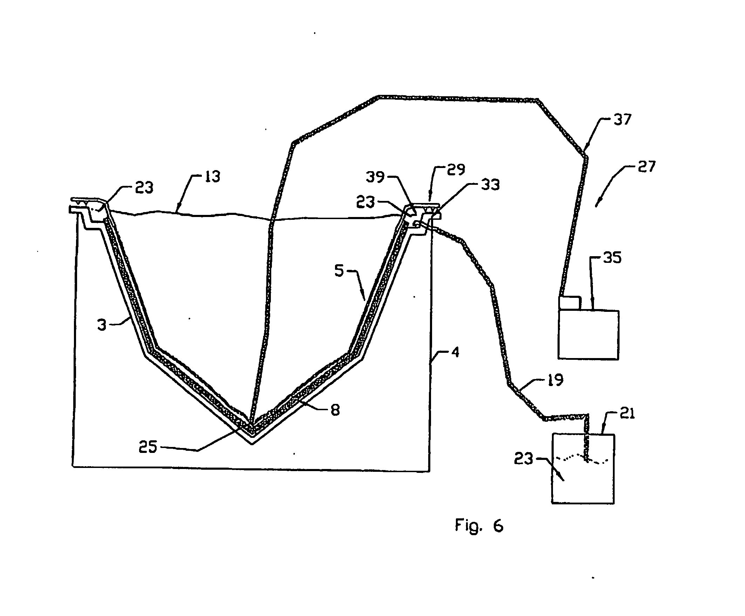

Figure 6 shows a variation of the system shown in Figure 5 and 5A where the vacuum supply means 27 is now only connected through the vacuum line 37 to opening 25 within the male mould section 5. The resin 23 within the ring chamber 39 is maintained at a sufficient level to provide a seal for the mould chamber 8 to thereby allow the vacuum to be maintained therein.

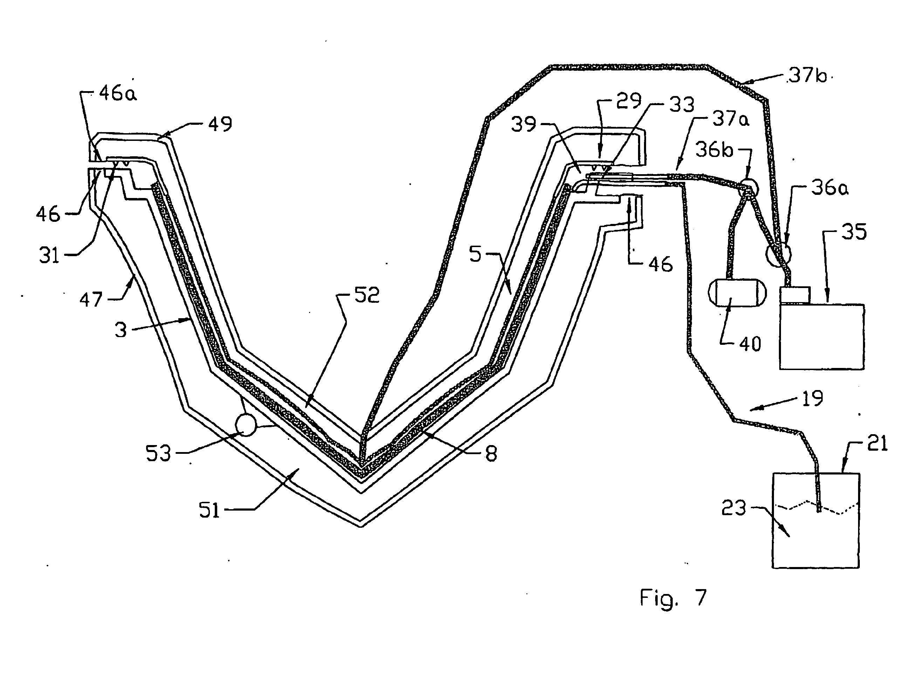

Figure 7 shows yet a further example embodiment of the present invention similar to the embodiment shown in Figures 5 and 5A. The difference is that the female mould section 3 is supported by the fluid in the chamber and sealed to the pressure chamber wall 47 via a resilient flange 46 in a floating relationship relative to a first outer housing 47, with a first pressure chamber 51 whereby being provided under the female mould section 3. Furthermore, the male mould section 5 is also supported by a second outer housing 49 to thereby provide a second pressure chamber 52 above the male mould section 5. The ring flange 29 supporting the male mould section 5 is connected via a resilient flange 46a to the second housing 49. Therefore both the female and male mould sections 3, 5 are sealed and supported in a floating relationship relative to their outer housings 47, 49. Liquid at elevated pressure can be circulated through both the first pressure chamber 51 and the second pressure chamber 52. The fluid pressure within each pressure chamber 51, 52 acts to force together the peripheral portion 33 of the female mould section 3 and the ring flange 29 of the male mould section 5 thereby facilitating the operation of the seal means 31. The opposing fluid pressures also acts to provide a balanced pressure over the entire extent of the composite material 15 located between the female and male mould sections 3, 5. This helps to provide a more uniform pressure over the fibre bundle 15 leading to improved compaction of and removal of air from the fibre bundle 15. Fluid at elevated temperatures can also be circulated through pressure chambers 51 and 52 to provide the necessary curing temperature where high temperature curing resins are being used. The elevated temperature also allows resin of relatively high viscosity to be used. The heating of the resin reduces its viscosity thereby facilitating the infusion of the resin through the fibre bundle.

The infusion of resin into the composite material 15 can also be facilitated by vibrating the mould assembly. A rotational vibrator 53 may therefore be secured to a portion of the mould assembly for this purpose. This vibrator 53 can for example be attached to the female mould section 3.

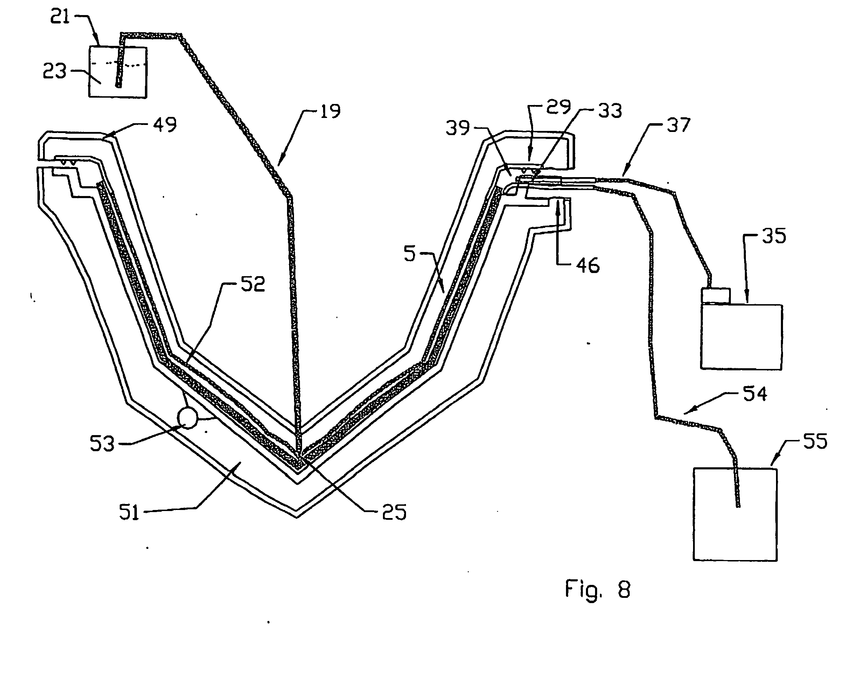

The system shown in Figure 8 also utilises pressure chambers 51, 52, the primary difference with the embodiment in Figure 7 being that the resin line 19 now supplies resin to the opening 25 with the lowermost part of the male mould section 5. A single vacuum line 37 is connected to the ring chamber 39. In this arrangement, resin is transferred from opening 25 through the mould chamber 8 towards the ring chamber 39. Any excess resin reaching the ring chamber 39 can be captured using an overflow line 54 into a resin overflow tank 55.

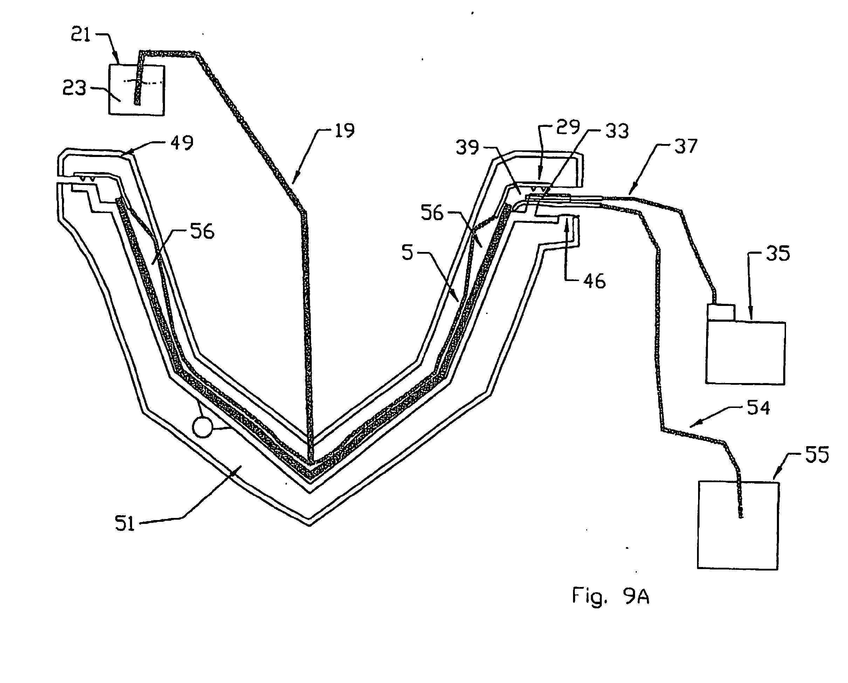

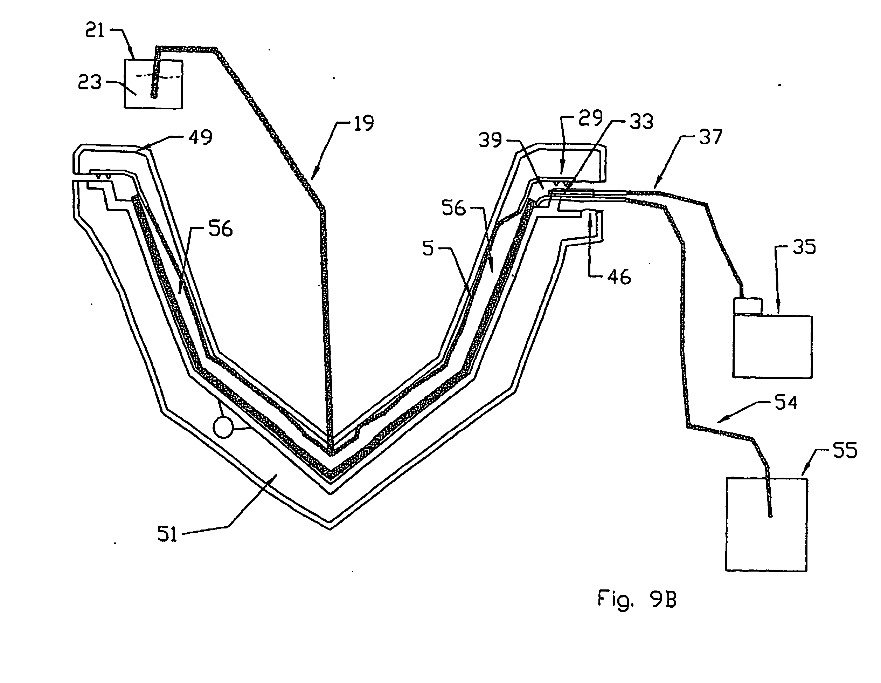

Figures 9A and 9B show the system of Figure 8 and illustrate an advantage of using a pressure chamber arrangement. It can be difficult to separate the male mould section 5 from the final cured composite component 56 because it is in direct contact with that component. Nevertheless, the male mould section can be simply peeled away from the component 56 by pumping the fluid from the pressure chamber as shown in the peeling sequence illustrated in Figures 9A and 9B.

As previously noted, Figure 10 illustrates the movement of the resin wave 46 in the direction shown by the arrow and the resin face 45 travelling in front of the resin wave 46. A sequence of these resin waves 46 can be generated according to the present invention.

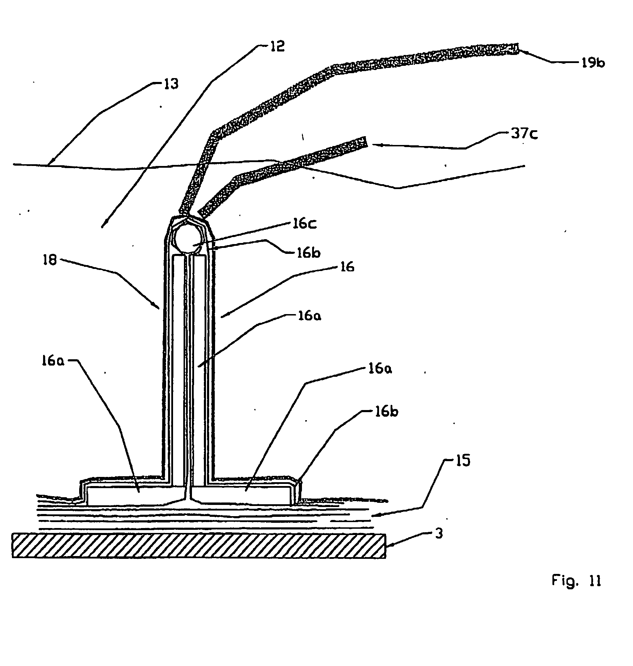

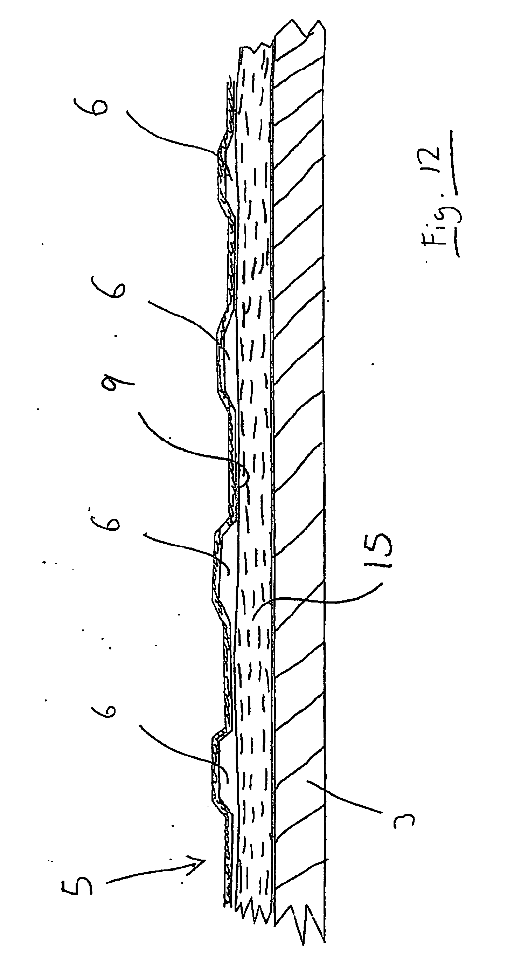

Figure 11 shows in more detail an upright 16 of the type shown in Figure 2. The upright includes a cone of foam 16a surrounded by a layer of reinforcing cloth 16b. A reinforcing rod or reinforcement materials 16c may be persistent as a reinforcement on the top edge of the upright, the rod 16c being also wrapped by reinforcing cloth 16b. The channel 18 within the male mould face 9 is conformed around the upright 16 because of the pressure of the fluid 12 surrounding the channel 18. Any air trapped within the channel 18 and the upright material 16 will tend to float upwardly as air bubbles because the air is effectively "underwater" being below the fluid level 13. A further vacuum line 37c can therefore be provided to help draw the resin into the vertical channel 18 and to remove the air escaping up through the channel 18. Once the channel is filled with resin, a further resin line 19 may then supply further resin back down the channel 18 to the rest of the fibre bundle 15. The evacuation of air from the fibre composite material 15 and the distribution of resin therein is facilitated by the provision of a series of channels 6 within the outer surface 9 of the male mould section 5 as shown in Figure 12. These channels 6 can be provided in a mesh pattern across the at least a major portion of the outer surface 9. The channels 6 provide a passage through which air to be evacuated and resin to be distributed can pass. Increasing the fluid pressure on the male mould section results in the flattening of the channels 6 such that the entire outer surface 9 abuts the fibre composite material 15. Any excess resin retained within the fibre composite material 15 and within the channels 6 are driven out as excess resin out of the mould chamber.

## Claims

1. A production system for producing a composite component including:
a mould assembly (1) including:
a rigid female mould section (3) having a female mould cavity (7);
resin supply means (17) for supplying resin (23);
a male mould section (5) formed of an elastically deformable material, the male mould section having an outer male mould face (9), and an inner volume (11) for accommodating a liquid (12);
a mould chamber (8) being defined between the female mould cavity (7) and the male mould face (9) when the female and male mould sections (3, 5) are brought together;
a vacuum supply means (27) for producing a vacuum in the mould chamber (8), and
vibration means (53) for vibrating the mould assembly (1);
**characterised in that**
a peripheral portion (33) surrounds the periphery of the female mould cavity, the peripheral portion including a ring chamber (39) within which the resin (23) can be supplied;
and **in that** a pressurised gas supply (40) is provided for supplying a pulse of high pressure gas periodically into the ring chamber (39).

2. A production system according to claim 1, wherein the ring chamber (39) is defined by a peripheral rigid ring flange (29) surrounding and supporting the male mould section (5), the ring flange engaging the peripheral portion (33) surrounding the female mould cavity (7).

3. A production system according to claim 2, further including a seal means, for example a resilient sealing rib(s) (31), provided between the ring flange (29) and the peripheral portion (33) to provide an at least substantially air tight seal for the ring chamber (39).

4. A production system according to any one of claims 1 to 3, wherein a series of resin lines supply resin to the ring chamber (39) at points distributed along the chamber.

5. A production system according to any one of claims 1 to 3, wherein a single resin supply line extends parallel with the ring chamber (39), the supply line having a series of bleed lines spaced therealong from which resin can be discharged into the ring chamber.

6. A production system according to any one of claims 1 to 5, wherein the vacuum supply means (27) includes a vacuum pump (35) and at least one vacuum line (37).

7. A production system according to claim 6, wherein a first said vacuum line (37b) is in communication with the mould chamber (8), and a second said vacuum line (37a) is in communication with the ring chamber (39), with a valve (36a) controlling the vacuum applied by both first and second vacuum lines.

8. A production system according to any one of claims 1 to 7, further including lower and upper resin sensors (41a, 41b) provided within the ring chamber (39) for respectively determining when the level of resin reaches a low point where further resin needs to be supplied, and a high point where no further resin needs to be supplied.

9. A production system according to any one of claims 1 to 8, wherein the female mould section (3) is supported in a floating arrangement on a first housing (47) to form a first pressure chamber (51), and the male mould section (5) is supported on a second housing (49) to form a second pressure chamber (52).

10. A production system according to claim 9, including fluid circulation means for circulating fluid at an elevated temperature through each pressure chamber (51, 52).

11. A production system according to claim 10, wherein the fluid circulation means further circulates fluid at elevated temperature or at a relatively lower temperature.

12. A production system according to any one of claims 1 to 11, wherein the elastically deformable mould section (5) has an outer surface (9), and a series of channels (6) provided within the outer surface.

13. A production system according to claim 12 wherein the channels (6) are provided in a mesh pattern across at least a substantial portion of the outer surface (9).

14. A production system according to claim 12 or 13 wherein the channels (6) flatten when a sufficiently high fluid pressure is applied to the elastically deformable mould section (9).

## Patentansprüche

1. Ein Herstellungssystem zum Herstellen eines Verbundwerkstoffbauteils, umfassend:
eine Formenanordnung (1), umfassend:
einen starren Matrizenformabschnitt (3), der eine Matrizenausnehmung (7) aufweist;
Harzversorgungsvorrichtung (17) zum Bereitstellen von Harz (23);
einen Patrizenformabschnitt (5), der aus einem elastisch verfomibaren Material hergestellt ist, und der Patrizenformabschnitt eine äußere Patrizenformfläche (9) und ein Innenvolumen (11) zum Aufnehmen einer Flüssigkeit (12) aufweist;
eine Formkammer (8), die von der Matrizenausnehmung (7) und der Patrizenformfläche (9) begrenzt ist, wenn der Matrizen- und Patrizenformabschnitt (3, 5) zusammengeführt werden;
eine Vakuumsaugvorrichtung (27) zum Bereitstellen von Vakuum in der Formkammer (8), und
Vibrationsvorrichtungen (53) zum Vibrieren der Formenanordnung (1);
**dadurch gekennzeichnet dass**,
ein Randabschnitt (33) den Rand der Matrizenausnehmung umgibt, wobei der Randabschnitt eine Ringkammer (39) umfasst, in der das Harz (23) bereitgestellt werden kann;
und dass ein druckbeaufschlagter Gasvorrat (40) zum periodischen Bereitstellen einen Pulses von Hochdruckgas in der Ringkammer (39) vorgesehen ist.

2. Ein Herstellungssystem nach Anspruch 1, wobei die Ringkammer (39) von einem umlaufenden starren Ringflansch (29) umgeben ist und den Patrizenformabschnitt (5) trägt, wobei der Ringflansch in den Randabschnitt (33) der Matrizenausnehmung (7) eingreift.

3. Ein Herstellungssystem nach Anspruch 2, ferner umfassend ein Dichtungsmittel, beispielsweise eine rückfedernde Dichtrippe(n) (31), die zwischen dem Ringflansch (29) und dem Randabschnitt (33) vorgesehen ist, um zumindest eine im Wesentlichen luftdichte Abdichtung für die Ringkammer (39) vorzusehen.

4. Ein Herstellungssystem nach einem der Ansprüche 1 bis 3, wobei eine Reihe von Harzleitungen Harz in der Ringkammer (39) an Punkten, die entlang der Kammer verteilt sind, bereitstellen.

5. Ein Herstellungssystem nach einem der Ansprüche 1 bis 3, wobei eine Harzversorgungsleitung sich parallel zur Ringkammer (39) erstreckt, wobei die Versorgungsleitung auf ihrer Länge beabstandet eine Reihe von Abzweigleitungen aufweist, durch die Harz in die Ringkammer abgeführt werden kann.

6. Ein Herstellungssystem nach einem der Ansprüche 1 bis 5, wobei die Vakuumsaugvorrichtung (27) eine Vakuumpumpe (35) und zumindest eine Vakuumleitung (37) umfasst.

7. Ein Herstellungssystem nach Anspruch 6, wobei eine erste Vakuumleitung (37b) mit der Formkammer (8) in Verbindung steht, und eine zweite Vakuumleitung (37a) mit der Ringkammer (39) in Verbindung steht, wobei ein Ventil (36a) das Vakuum steuert, mit dem die erste und zweite Vakuumleitung beaufschlagt ist.

8. Ein Herstellungssystem nach einem der Ansprüche 1 bis 7, ferner umfassend untere und obere Harzsensoren (41a, 41b), die innerhalb der Ringkammer (39) angeordnet sind und jeweils erkennen, wenn der Harzpegel einen Tiefpunkt erreicht, an dem weiteres Harz bereitzustellen ist, und einen Höhepunkt erreicht, an dem kein weiteres Harz bereitzustellen ist.

9. Ein Herstellungssystem nach einem der Ansprüche 1 bis 8, wobei der Matrizenformabschnitt (3) von einer schwimmenden Anordnung auf einem ersten Gehäuse (47) gestützt ist um eine erste Druckkammer (51) zu bilden, und der Patrizenformabschnitt (5) auf einem zweiten Gehäuse (49) gestützt ist um eine zweite Druckkammer (52) zu bilden.

10. Ein Herstellungssystem nach Anspruch 9, umfassend Fluidzirkulationsmittel zum Zirkulieren eines Fluids durch jede Druckkammer (51, 52) bei einer erhöhten Temperatur.

11. Ein Herstellungsverfahren nach Anspruch 10, wobei das Fluidzirkulationsmittel ferner Fluid bei einer erhöhten Temperatur oder bei einer relativ niedrigen Temperatur zirkuliert.

12. Ein Herstellungssystem nach einem der Ansprüche 1 bis 11, wobei der elastisch verformbare Formabschnitt (5) eine äußere Oberfläche (9) und eine Reihe von Kanälen (6), die in der äußeren Oberfläche angeordnet sind, aufweist.

13. Ein Herstellungssystem nach Anspruch 12, wobei die Kanäle (6) in einem Netzmuster angeordnet sind, das sich über zumindest einen wesentlichen Bereich der äußeren Oberfläche (9) erstreckt.

14. Ein Herstellungssystem nach Anspruch 12 oder 13, wobei die Kanäle (6) abflachen, wenn ein ausreichend hoher Fluiddruck auf den elastisch verformbaren Formabschnitt (9) ausgeübt wird.

## Revendications

1. Système de production pour produire un élément composite comprenant :
un ensemble formant moule (1) comprenant :
un élément de moule femelle rigide (3) ayant une cavité de moule femelle (7) ;
des moyens d'alimentation en résine (17) destinés à délivrer de la résine (23) ;
un élément de moule mâle (5) formé à partir d'un matériau élastiquement déformable, l'élément de moule mâle ayant une face de moule mâle externe (9) et un volume interne (11) pour contenir un liquide (12) ;
une chambre de moule (8) étant définie entre la cavité de moule femelle (7) et la face de moule mâle (9) lorsque les éléments de moule femelle et mâle (3, 5) sont réunis ;
des moyens d'alimentation en vide (27) pour produire un vide dans la chambre de moule (8), et
des moyens de vibration (53) pour faire vibrer l'ensemble formant moule (1) ;
caractérisé en ce qui :
une partie périphérique (33) entoure la périphérie de la cavité de moule femelle, la partie périphérique comprenant une chambre annulaire (39) à l'intérieur de laquelle il est possible d'injecter la résine (23) ;
et en ce qu'une alimentation en gaz sous pression (40) est prévue pour envoyer périodiquement une décharge de gaz sous haute pression dans la chambre annulaire (39).

2. Système de production selon la revendication 1, dans lequel la chambre annulaire (39) est définie par une bride annulaire rigide périphérique (29) entourant et supportant l'élément de moule mâle (5), la bride annulaire venant en prise avec la partie périphérique (33) entourant la cavité de moule femelle (7).

3. Système de production selon la revendication 2, comprenant en outre des moyens de scellement, par exemple une ou plusieurs nervures de scellement élastiques (31), prévus entre la bride annulaire (29) et la partie périphérique (33) pour fournir à la chambre annulaire (39) un scellement au moins sensiblement étanche à l'air.

4. Système de production selon l'une quelconque des revendications 1 à 3, dans lequel une série de tuyaux d'alimentation en résine délivre de la résine dans la chambre annulaire (39) au niveau de points répartis le long de la chambre.

5. Système de production selon l'une quelconque des revendications 1 à 3, dans lequel un tuyau d'alimentation en résine unique s'étend parallèlement à la chambre annulaire (39), le tuyau d'alimentation ayant une série de tuyaux de purge espacés tout le long à partir desquels la résine peut être injectée dans la chambre annulaire.

6. Système de production selon l'une quelconque des revendications 1 à 5, dans lequel les moyens d'alimentation en vide (27) comprennent une pompe à vide (35) et au moins un tuyau à vide (37).

7. Système de production selon la revendication 6, dans lequel un premier dit tuyau à vide (37b) est en communication avec la chambre de moule (8) et un second dit tuyau à vide (37a) est en communication avec la chambre annulaire (39), avec une soupape (36a) régulant le vide appliqué à la fois par le premier et le second tuyau à vide.

8. Système de production selon l'une quelconque des revendications 1 à 7, comprenant en outre des capteurs de résine supérieur et inférieur (41a, 41b) prévus à l'intérieur de la chambre annulaire (39) pour déterminer respectivement le moment où le niveau de résine atteint un point bas auquel de la résine supplémentaire doit être injectée et un point haut auquel il n'y a pas besoin d'injecter de résine supplémentaire.

9. Système de production selon l'une quelconque des revendications 1 à 8, dans lequel l'élément de moule femelle (3) est supporté dans un agencement flottant sur un premier logement (47) pour former une première chambre sous pression (51) et l'élément de moule mâle (5) est supporté sur un second logement (49) pour former une seconde chambre sous pression (52).

10. Système de production selon la revendication 9, comprenant des moyens de circulation de fluide pour faire circuler du fluide à haute température dans chaque chambre sous pression (51, 52).

11. Système de production selon la revendication 10, dans lequel les moyens de circulation de fluide font en outre circuler du fluide à haute température ou à température relativement basse.

12. Système de production selon l'une quelconque des revendications 1 à 11, dans lequel l'élément de moule élastiquement déformable (5) a une surface externe (9) et une série de canaux (6) prévus dans la surface externe.

13. Système de production selon la revendication 12, dans lequel les canaux (6) sont prévus dans une configuration de maillage sur au moins une partie substantielle de la surface externe (9).

14. Système de production selon la revendication 12 ou 13, dans lequel les canaux (6) s'aplatissent lorsqu'on applique une pression de fluide suffisamment forte sur l'élément de moule élastiquement déformable (9).
